# EUROPEAN PATENT SPECIFICATION

(11) **EP 1 182 539 B1**
(45) Date of publication and mention of the grant of the patent: **25.03.2009**
(21) Application number: 00117643.7
(22) Date of filing: 16.08.2000
(51) Int. Cl.: G06F 3/01

(54) **Haptic device control**
Steuerung einer Vorrichtung mit taktiler Rückkopplung
Commande de dispositif à perception tactile

(43) Date of publication of application: 27.02.2002
(73) Proprietor: Sony Deutschland GmbH, 10785 Berlin (DE)
(72) Inventor: Michelitsch, Georg, c/o Advanced Technology Center, 70327 Stuttgart (DE)
(74) Representative: Müller - Hoffmann & Partner

(56) References cited:
- WO-A-97/21160
- WO-A-99/39273
- US-A- 5 186 629

## Description

The invention relates to the field of haptic devices as a means to interact with a computerized system and describes a method for interacting with such a system through the sense of touch in combination with other user-input modalities such as graphics and speech. In particular, a method to control a device via a haptic system comprising a haptic input/output device is described.

The first examples of providing haptic feedback to users have been the result of work in the field of telerobotic systems. An early example would be the work by Goertz and Thompson [4] in the 1950's at the Argonne National Laboratory. The operator controlled a "master" arm that transmitted his commands to a remote slave. The "slave" follows the "master" input and interacts with the potentially harmful environment. Feedback signals received from sensors at the "slave" are transformed into force feedback felt by the user grasping the "master" arm [1].

In 1965 Ivan Sutherland envisioned an ultimate display, which combined a 3D graphic image of a virtual computer generated model with the corresponding haptic feedback to the user [8]. This led to a research project at the University of North Carolina at Chapel Hill called GROPE, which has as its goal the simulation of molecular docking forces. Early results were presented in 1971 [2], and a much-improved version followed in 1990 [3].

During the same period of time, a general method for presenting virutally created objects to a human user through touch was described in US Patent No. 3,919,691 assigned to Bell Laboratories. Here, a general method and apparatus is described that allows a user to feel computer generated (virtual) object scenes through a force feedback mechanism. Many haptic systems in the virtual reality community use the same principles as the system described in this document. However, no mechanisms for controlling a computerized system and its applications through a haptic interface is described.

US Patent No. 5,844,392 assigned to Cybernet Systems in 1998 expands on the ideas expressed in US Patent No. 3,919,691 and introduces among other things the concept of a logical probe object associated with the hapric device. This probe moves as the haptic device moves and interacts with the virtual object scene. This interaction can be felt by the user through force feedback, However, only the browsing of that computer generated object scene is described.

One of the first haptic desktop devices to be used with a personal computer was developed by Minsky and colleagues at the Massachusetts Institute of Technology. It used a two-degree of freedom joystick that could apply force feedback to the user in order to create the sensation of moving over various samples of sandpaper [7].

The first commercial systems were introduced in the early 1990's. The PHANToM arm [6] and the Impulse Engine [5] are two popular low cost solutions available today.

With similar devices various applications in the Virtual Reality domain were developed, such as VR training systems for the medical community, virtual reality video games at home and in arcades, and applications for the military such as aircraft trainers [1].

Another area for applying haptic feedback has been the augmentation of traditional graphical user interfaces (GUI). As described in WO97/21160 A2 assigned to Immersion Human Interface Corporation, force feedback is applied to a modified PC input device such as mouse or pen, whenever the user interacts through a cursor with familiar on-screen user interface components such as buttons, sliders, and menus. Therewith, the haptification of a general-purpose graphical user interface for desktop computers is described. In great detail several methods for adding haptic feedback to the operation of common user interface controls in a graphical user interface such as sliders, buttons, menus, and windows are shown. To that end, forces for the haptic input/output device are created that are based on a metric, which uses the distance between the on-screen cursor and a user interface widget. This way, an inherently two-dimensional user interface gains a third, haptic dimension.

In 1999 McNeely et al presented a paper at SIGGRAPH '99 which describes a system that allows a user to guide a moderately complex virtual model of an objects through a static, virtual landscape. In order to make this possible, the authors developed a 6 DOF (Degree of Freedom) haptic rendering software based on software called Voxmap PointShell (VPS) developed by the Boeing Corporation [9]. The claimed advantage of the software is the high performance that allows haptic rendering in real-time for arbitrarily complex virtual scenes. Its intended uses are for applications such as maintenance and assembly task simulations.

The prior art discussed above either focuses on the realization of haptic input/output devices as such, or it deals with applications of such devices to scenarios, where a real-world task is simulated in a virtual environment and force-feedback improves the "realism" of the simulation. The above mentioned WO 97/21160 A2 discloses an application of a haptic system in that the control of a computer operating system is improved. However, this disclosed system can not be operated with the sense of touch alone.

Therefore, it is the object underlying the present invention to provide - as an application of a haptic system - a reliable method to control a device via a haptic system comprising a haptic input/output device.

XP-001167343 C. Sjöström/K.Rassmus-Gröhn. "The Sense of Touch Provides New Computer Interaction Techniques For Disabled People" describes the use of haptics for visually impaired people and people with physical disabilities by extending the range of touch from the length of an arm to a virtually unlimited distance.

XP-0011532242 C. Sjöström. "The IT Potential of Haptics", licentiate thesis, 1999, describes another touch access for people with disabilities.

This object is solved according to the method defined in independent claim 1. Preferred embodiments thereof are respectively defined in dependent claims 2 to 11.

The method to control a device via a haptic system comprising a haptic input/output device according to the present invention is characterized by assigning a command to a location on a virtual command object and issuing said command to said device after said location is selected via said haptic input/output device.

Therewith, a general teaching is given how to link commands used to control said device with the haptic input/output device. The method according to the present invention implies that at least one command object is virtually generated which respectively comprises at least one location to which a command to control said device can be assigned. After such an assignment is performed and said location is selected via the haptic input/output device said command is issued to the device. In contrast to the prior art, the present invention provides a multi-system mode in that a controllable device is connected to and controlled via a haptic system. In other words, the present invention is not focussed on the haptic system as such, but on the application of haptic techniques to the task of controlling other devices. The virtual object associated with the haptic input/output device does not interact with the virtual world for its own sake, but provides a means for the user to interact with the functionality of a system, which is modeled e.g. as three-dimensional features on a virtual landscape.

Preferably, one command or a subset of all possible commands is assigned to a resting-place within a virtual landscape to which a corresponding virtual selection object associated with the haptic input/output device can be fitted.

In this case, the virtual landscape can be regarded as virtual command object in case one command is assigned to every resting-place. However, in case a subset of possible commands is assigned to a resting-place the virtual landscape serves only as an indirect virtual command object in that in case the virtual selection object associated with the haptic input/output device is fitted to such a resting-place a virtual command object has to be assigned to which unequivocally defines one location for one command. Of course, it is also possible to arrange several layers of indirect virtual command objects before said virtual command object gets generated which unequivocally defines one location for one command.

Further preferably, one of different virtual selection objects can be associated to said haptic input/output device.

In this case the possibility exists that a different command or a different subset of possible commands is assigned to one location within the virtual landscape and selected according to the virtual selection object actually associated to the haptic input/output device. This embodiment could be regarded as a "multilayer" virtual landscape wherein a respective layer is selected by association of a corresponding one of different virtual selection objects to said haptic input/output device.

However, in this case it is also possible that one corresponding resting-place exists for each different virtual selection object. Therewith, with an appropriate design of the virtual landscape and possible virtual selection objects e. g. only one resting-place exists for each different virtual selection object so that at least a predetermined number of commands or predetermined number of subsets of commands can very easily and fast be activated via the haptic input/output device. Of course, it is also possible that more than one resting-place exists for one different virtual selection object to exclude a subset of commands when the haptic input/output device is associated to said virtual selection object. It is also possible that a virtual selection object might "fit" into several different resting-places.

Still further preferably, a simulated attracting force comparable to a real magnetic force is applied to the virtual selection object whenever it comes within a certain range of the corresponding resting-place. Alternatively or additionally, a simulated gravitional force modeled after gravitation is applied to the virtual selection object throughout the landscape. Further alternatively or additionally different simulated friction areas might be arranged along a path of the virtual selection object to the corresponding resting-place.

Therewith, different techniques which can be used in haptic systems are adapted to guide a virtual selection object through the landscape and to corresponding resting-places so that a user operating the haptic input/output device receives some information not only via the location of the haptic input/output device, but also via a force feedback which is generated within the haptic input/output device according to the virtual landscape and the forces applied to the virtual selection object within the virtual landscape when moving the virtual selection object to a resting-place. Of course, also other models to provide a force feedback to a user are applicable to the present invention.

As a second embodiment, alternatively or additionally to the above-described preferred embodiment according to the present invention a virtual selection object associated with the haptic input/output device might be movable to the location on said virtual command object corresponding to said command to select said command. Of course, in combination with the above-described embodiment also a subset of commands might be selected by moving the virtual selection object to the location on said in this case indirect virtual command object corresponding to said subset of commands.

As a third embodiment, further alternatively or additionally to those both above described embodiments said virtual command object might be associated with said haptic input/output device which virtual command object is movable into a position so that the location associated with said command shows to a predetermined direction to select said command.

In combination with the first of the above-described preferred embodiments according to the present invention said virtual command object might be associated to said haptic input/output device after the virtual selection object has been fitted into a corresponding resting-place. In this case, a subset of all possible commands can be selected, after the above mentioned virtual selection object has been fitted into the corresponding resting-place on the virtual landscape. The association between the haptic input/output device and the virtual selection object is replaced with an association between the haptic input/output device and another object, which serves as an indirect virtual command object. The virtual command object can then be moved into a position in such a way that the location and/or direction of said command object uniquely identifies one of the commands embedded into said command object.

Of course, when staying within the first of the above-described embodiments a different virtual landscape can provide different corresponding resting-places like a second or further layer.

In this case, preferably, different simulated attracting forces comparable to real magnetic forces are applied to the virtual command object depending on its position and orientation during movement of said virtual command object and/or a simulated gravitional force modeled after gravitation is applied to the virtual command object and/or different simulated friction areas are arranged along the virtual command object. Therewith, as stated above, different techniques are proposed to guide a user with help of said haptic input/output device to a predetermined command or subset of commands located on said virtual command object.

Further preferably, it is simulated that a tip of at least one virtual assemble consisting of a spring coil and a damper unit which is fixed to a virtual anchor point is touching that command object and further preferably, said tip comprises a roller or a plate. Therewith, a reference is defined in respect to the simulated attracting forces, the simulated gravitional force and/or the simulated friction areas.

Still further preferably, one of different virtual command objects might be associated to said haptic output device. In combination with the first of the above-described embodiments this association might be performed dependent on the resting-place. Alternatively or additionally, such an association might also be performed dependent on other criteria, like a manual selection, in which case it is also applicable to the third embodiment alone.

Still further preferably, said virtual command object is modeled as a three-dimensional object.

Still further preferably, said virtual selection object and said virtual landscape are modeled as three-dimensional objects. In this case, the virtual selection object might be modeled as a sphere and the virtual landscape might be modeled as a system of pipes.

According to the present invention, additionally to the haptic information also visual and/or oral information might be conveyed to the user. Therewith, the present invention is not limited to the input/output of haptic information, but a combination with other interaction modalities is possible.

Therewith, the present invention discloses a method where virtual objects generated by a computer can interact with each other according to rules that might correspond to the laws of solid object physics to control a device. Furthermore, it comprises an input-output device that allows sensing the position of a virtual object and that produces force feedback to the user.

In particular, according to the present invention the virtual object associated with the haptic input/output device might convey its command selecting capability to the system not only via the position of that virtual object alone, but also via its shape. The virtual selection object can then only be fitted into certain predefined areas of the virtual landscape. As a result, the user is guided in exploring the full capabilities of a system and therefore his ability to operate such a system with the sense of touch alone is greatly enhanced.

Further, according to the present invention the user manipulates a virtual command object directly via an association between the haptic input/output device and said virtual command object, and not through the indirect means of a cursor object. This allows a user to easily remember the required hand movement for selecting a command, again facilitating the operation of the system with the sense of touch alone.

Further features and advantages of the present invention will become apparent from the following detailed description of preferred embodiments thereof taken in conjunction with the accompanying drawings, wherein
- **Fig. 1**: shows a conceptional view of a piping model for modes according to a preferred embodiment of the present invention;
- **Fig. 2**: shows mode resting-places in the piping model shown in Fig. 1;

- **Fig. 3**: shows an example of a physical model for a sculptured menu according to a preferred embodiment of the present invention;
- **Fig. 4**: shows an example of a physical model for a sculptured menu according to a further preferred embodiment of the present invention; and
- **Fig. 5**: shows two examples of sculptured menus according to the present invention.

In the following example there is exactly one object within the virtual world associated with the I/O device. As the device moves in 3D space, the associated virtual object moves accordingly and interacts with the rest of the virtual world, e. g. collides with other objects or is influenced by virtually created fields that might behave like magnetic fields. The haptic device also has at least one button attached. As the user pushes one of these buttons, a different object of the virtual scene is associated with the haptic device, e. g. a different command object, a different selection object or a different landscape. As the user releases that button the original object association is restored. In alternative solutions the association would be kept until another button is pressed or a single button might be used to cycle through a list of objects to be associated with the device.

The information and commands to perform operations on the information are modeled like such three-dimensional objects in virtual space. The above-mentioned input/output device can be grasped by the user's hand and moved into different positions. To that end the device offers multiple degrees of freedom (n ≥ 1). As the user moves the device, the objects mentioned above can be felt through the use of force feedback. The user navigates through the information space by associating a virtual transparent "browsing tool" with the input/output device and moving the device around. This browsing tool can be imagined as a device providing a portal view into the landscape and might always be the object associated with the device by default.

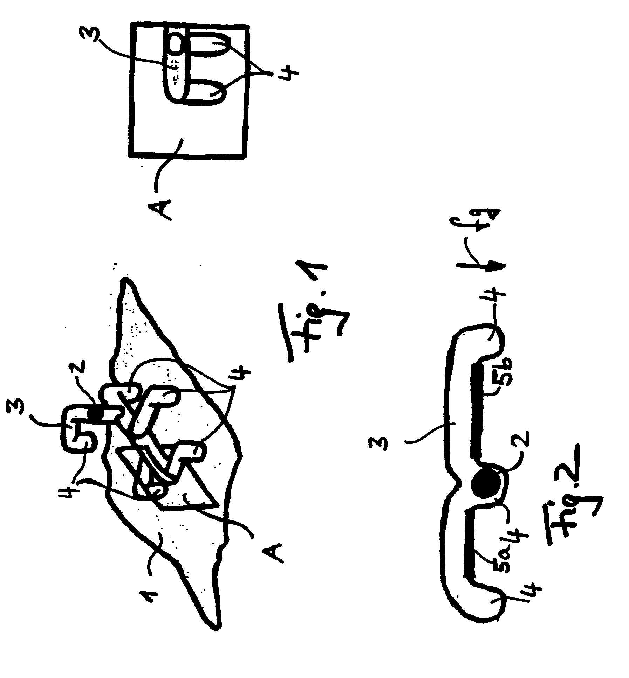

Figure 1 shows one embodiment where the portal viewer is constrained to a system of "pipes" where - conceptionally - a sphere linked to that portal viewer moves inside these pipes.

In particular, Fig. 1 shows a virtual landscape 1 comprising a pipe system model 3 within which a sphere 2 as a virtual selection object can be moved by way of an associated haptic input/output device. Within the pipe system model 3 several resting-places 4 exist into which the sphere 2 can be moved and which will somehow attract the sphere 2, e. g. by applying a gravitational force. On the left hand side of Fig. 1 a "cut away plane" A is shown. On the right hand side of Fig. 1 a frontal view of said "cut away plane" A is depicted, which shows two resting-places 4 within the pipe system model 3. These resting-places 4 are located lower than the other parts of the pipe system model 3 shown so that the sphere 2 will fall automatically into one of the resting-places 4 whenever said sphere 2 is moved into a position above one of said resting-places 4 and a simulated gravitational force is applied to said sphere 2.

This method of directing the sphere 2 into a resting-place and/or applying force feedback to the haptic input/output device will be further elucidated with the help of Fig. 2.

Figure 2 shows a model of the pipe system in which the sphere has to overcome some form of force, e. g. gravity like or magnetic like, in order to be moved from one resting-place, representing a mode, to another. On the way between resting-places different material might be simulated on the surface of the pipe.

Fig. 2 shows three resting-places 4 which are connected by two joining pipe parts. The resting-places 4 respectively lie beneath the joining pipe parts so that the sphere 2 will automatically fall into a resting-place 4 in case it is moved into the area thereof and a gravitational force fg is applied in the direction of a resting-place 4, as it is shown in Fig. 2 by an arrow fg. The sphere 2 can be moved out of a resting-place 4 in case a force is applied to it via the haptic input/output device which is bigger than the gravitational force fg. Fig. 2 also shows that the joining pipes are cladded by different materials on their bottom surface so that when moving the sphere through a joining pipe and a gravitational force is applied to the sphere a force feedback depending on the cladding material is output to the user via the haptic input/output device. For example, one of the joining pipes might be cladded with a very hard cladding material 5a, such as glass, and the other joining pipe might be cladded with a soft cladding material 5b, such as a rubber cladding. In case the user moves the sphere 2 out off the resting-place 4 to which both joining pipes are connected a respective force feedback dependent on the respective cladding material 5a, 5b can be generated so that the user knows into which joining pipe the sphere was moved in addition to other feedback, such as visual feedback.

As shown in the above examples, a landscape that constrains the movement of a browser tool restricts the ways a user can explore the data which is encoded within the virtual landscape. The end-point of a path imposed on the browser tool can be modeled as the resting-place for that browser tool. This can be accomplished by having that place shaped in such a way that the browser tool fits into that space and can only be moved out of that place with a certain amount of force, as shown and described in connection with Figure 2. The following techniques can be used:
(1) Magnetic force. A simulated, attracting force similar to the magnetic force in the real world can be applied to the browser tool whenever the browsing tool comes within a certain range of the mode resting-place.
(2) Gravitational force. A general, simulated force modeled after gravitation is applied to the browsing tool throughout the landscape. The mode resting-places are shaped in such a way that the user has to move the browsing tool "up-hill" in order to leave that resting-place. As a result, leaving that mode requires the user to overcome the same barrier again. He has to apply force in order to overcome the simulated gravity implied by the elevation of the barrier.
(3) Friction. The path leading to the mode resting-place can be modeled in such a way that it simulates different materials and their properties such as ice or rubber. As a result, different levels of frictional forces can be felt as the user moves the browsing tool along that path.

The resting-place in the landscape can be viewed as the equivalent of modes in a traditional user interface. A mode is defined strictly as the subset of all possible commands the user can issue to the system. Therefore, the user switches between modes by moving the browser tool from one resting-place in the landscape to another. Since the haptic device moves in synchronism with the browsing tool in the virtual world, the resting position, and therefore the modes, can be felt by the user through the location of the device in space. The user reaches out to the device, touches it, and knows immediately which mode the system is in without having to look at the device.

Of course, a subset of all possible commands can also be only one command in which case the command may directly be issued when the mode is reached.

In addition to the sense of touch, the information selected by the user through changing the position of the haptic device can also be conveyed to the user via different media channels, such as visual or aural information channels.

Alternatively or additionally, in order to issue a command, the haptic input-output device might offer at least one "command activation" button. By pressing one of the command activation buttons on the device a virtual command object is associated with the device. Such an association might also be performed automatically in case a mode is reached or in case the browser tool, i. e. the virtual selection object, rests for a predetermined time in a resting-place corresponding to a mode. Any movement with the haptic input/output device now manipulates the associated command object. As that command object is manipulated, one of the commands contained in that object is selected. On release of the previously pressed activation button the above-mentioned selected command will be executed and the object association will be restored as described above.

Another class of command tools would move around the data landscape like the browsing tool mentioned above. Such command tools would trigger an operation on another object in the information landscape, whenever they are hitting another object, or are situated within a predefined distance to that object.

Commands, i. e. menu items, are modeled as locations on a three-dimensional object. The user initiates the selection of a command, e. g. by first pressing the command activation button and then moving a kind of virtual cursor along the menu object. The position of the cursor is directed via hand movement. The user can move the cursor using one or more degrees of freedom provided by the haptic input/output device. The cursor position is indicated through a visual feedback mechanism (for instance a spot light directed to one specific menu item). In addition, the user can feel the shape of the object through force feedback. As the user releases to command activation button the currently highlighted menu item will become the command executed by the system.

To that end, each item within a menu is sculptured in a unique way. As the user steps through each menu item, he feels a different feedback through the interface device. The feedback experience can include surface friction that simulates the feel of familiar materials. Furthermore, force feedback can simulate the "climbing" of barriers between menu items or indicate the shape of a menu item itself, such as convex or concave shapes.

These haptic effects can be realized through various methods. One way is based on a physical model. Whenever the user pushes the command activation button, the lateral degrees of freedom of the haptic device are disabled and the selected menu object is anchored at one point of that menu object. Furthermore, several virtual assembles consisting of a spring coil and a damper unit with a roller at the tip of the assembly are directed towards the menu object.

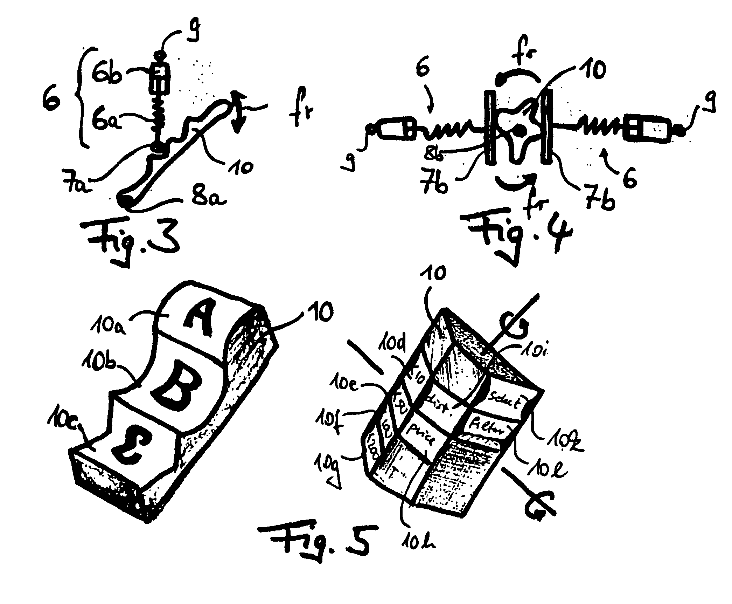

Fig. 3 shows one example of such a spring coil and damper unit wherein a menu object 10 with an anchor point 8 around which a rotational force fg can be applied has one roller 7a of a spring coil and a damper unit 6 directed towards it and touching it. The spring coil and damper unit 6 comprises a spring coil 6a attached to the roller 7a and a damper 6b attached to the other side of the spring coil 6a and also to a virtual fixed point 9. Of course, as mentioned above, also several such spring coil and damper units 6 with roller 7a can be directed towards the menu object 10. Also, one spring coil and damper unit 6 may have more than one roller 7a attached to its tip.

Upon rotation of the menu object 10 around its anchor point 8 the roller 7a attached to the spring coil and damper unit 6 slides over the surface of the menu object 10 and associated therewith different force feedbacks sensations are generated in the haptic input/output device associated to the menu object 10.

Fig. 4 shows another example wherein two spring coil and damper units 6 having a plate attached to their tip are arranged on opposite sides of a command object 10 so that a respective plate 7b touches said command object 10 which is rotatable around an anchor axis 8b which lies perpendicular to an axis through the spring coils 6a of the spring coil and damper units 6. Also in this case upon rotation of the virtual command object 10 around its anchor axis 8b under appliance of a rotational force fᵣ different haptic sensations are generated within the haptic input/output device associated to the virtual command object 10 based upon the forces applied to said virtual command object 10 by the virtual spring coil and damper units 6.

As mentioned above, when the user tilts the menu object 10 through the haptic input/output device, the rollers at the tip of these assemblies will roll along the sculptured surface of the menu object. As a result, the user will feel the force applied from these spring damper assemblies as the roller climbs the ridges between the menus and descends into the valleys of the menu items. Of course, also other shapes of the tip can be realized for the generation of different haptic effects.

Figure 5 shows on the left hand side a simple menu that can be operated with one degree of freedom. On the right hand side, another example shows a menu object with commands placed on it, which requires two degrees of freedom in order to select all menu items.

The simple command object 10 shown on the left hand side of Fig. 5 comprises three locations 10a - 10c adjacent to each other and linearly arranged in one column to which different commands can be associated. All of these locations have a different shape so that through a spring coil and damper unit 6 as shown in Fig. 3 different force feedback sensations are generated within the haptic input/output device associated to the virtual command object 10. For example, a first command "A" is associated to the first location 10a which is bend outwards of the virtual command object 10 like the positive part of a sinus wave signal, a second command "B" is associated to a second location 10b bend inwards into the virtual command object 10 like the negative part of a sinus wave signal, and a third command "C" is assigned to a third location 10c bend inwards into the virtual command object 10 like the negative part of a triangular wave signal. Of course, other shapes are possible. Alternatively or additionally also different surface properties might be given to the different locations.

The right hand side of Fig. 5 shows a three-dimensional command object 10 which basically comprises three surfaces comparable to that of the virtual command object 10 shown on the left hand side of Fig. 5 attached to each other and additionally one connecting surface, i. e. three columns attached to each other on their longer side to build an even prism having four sides. Therefore, upon rotation of said virtual command object 10 around a longitudinal and vertical axis different force feedback sensations are applied to the associated haptic input/output device in case spring coil and damper units 6 are touching the virtual command object 10 like it is shown in Fig. 3 or Fig. 4. Of course, the additionally arranged connecting surface might be omitted in which case the virtual command object would be a triangular even prism. Further, it is not necessary that the prism is even. Still further, also other three dimensional objects might be used instead a prism.

### References

1. Burdea, C. Grigore: "Force and Touch Feedback for Virtual Reality". John Wiley & Sons, Inc. 1996.
2. Batter, J. and F. Brooks Jr.: "GROPE-I: A computer display to the sense of feel". Proceedings of ITIP Congress 1971, pp. 759- 763.
3. Brooks, F. Jr., M. Ouh-Young, J. Batter and A. Jerome. "Project GROPE - Haptic Displays for Scientific Visualization". Computer Graphics, Vol. 24, No. 4, 1990, pp. 177- 185.
4. Goertz, R. and R. Thompson. "Electronically comtrolled manipulator". Nucleonics 1954, pp. 46 - 47.
5. Jackson, B. and L. Rosenberg. "Force Feedback and Medical Simulation". Interactive Technology and the New Paradigm for Healthcare, IOS Press, Amsterdam, Chapter 24, pp. 147 - 151, January 1995.
6. Massie, T. and K. Salisbury. "The PHANToM Haptic Interface: A Device for Probing Virtual Objects". ASME Winter Annual Meeting, DSC-Vol. 55-1, ASME, New York 1994, pp. 295 - 300.
7. Minsky, M., M. Ouh-Young, O. Steele, F. Brooks Jr. and M. Behensky. "Feeling and Seeing: Issues in Force Displays". Computer Graphics, ACM Press, Vol. 24, No. 2, March 1990, pp. 235 - 243.
8. Sutherland, I. "The Ultimate Display". Proceedings of International Federation of Information Processing 1965, pp. 506 - 508.
9. McNeely, W., Puterbaugh, K., and Troy, J. "Six Degree-of-Freedom Haptic Rendering Using Voxel Sampling". Proceedings of SIGRAPH '99.

## Claims

1. Method to control a device via a haptic system comprising a haptic input/output device, comprising the steps of:
- virtually generating at least one three-dimensional virtual landscape;
- associating a three-dimensional virtual selection object with said haptic input/output device, which virtual selection object is a virtual object that can be moved around within said virtual landscape by said haptic input/output device;
- assigning a command (A, B, C) to a location (4; 10a - 10c; 10d - 101) on said virtual landscape (1, 3; 10),
wherein said virtual selection object (2) associated with the haptic input/output device is moveable to the resting-place (4; 10a - 10c; 10d - 101) on said virtual landscape (1, 3) corresponding to said command (A, B, C) to generate said command (A, B, C);
- automatically issuing said command (A, B, C) to said device, which has to be controlled, after said virtual selection object (2) has been moved to said resting-place (10a - 10c; 10d - 101) via said haptic input/output device and rests for a predetermined time at said resting place (4), **characterized in that**
said moving is guided between at least two resting-places (4) by a force output to the user by imposing the force to said haptic input/output device,
wherein each resting-place (4) is configured so as to attract the virtual selection object (2) within a certain range.

2. Method according to claim 1, **characterized by** assigning one command or a subset of all possible commands to a resting-place (4) within said virtual landscape (1, 3) to which a corresponding virtual selection object (2) associated with the haptic input/output device can be fitted.

3. Method according to claim 2, **characterized by** associating one of different virtual selection objects to said haptic input/output device.

4. Method according to claim 3, **characterized in that** at least one corresponding resting-place exists for each different virtual selection object.

5. Method according to anyone of the preceding claims 2 to 4, **characterized by** applying a simulated attracting force comparable to a real magnetic force to the virtual selection object (2) whenever it comes within a certain range of the corresponding resting-place (4).

6. Method according to anyone of the preceding claims 2 to 5, **characterized by** applying a simulated gravitational force modeled after gravitation to the virtual selection object (2) throughout the landscape (1, 3).

7. Method according to any one of the preceding claims 2 to 6, **characterized by** arranging different simulated friction areas (5a, 5b) along a path of the virtual selection object (2) to the corresponding resting-place (4).

8. Method according to any one of the preceding claims 2 to 7, **characterized in that** said virtual selection object (2) and said virtual landscape (1, 3) are modelled as three dimensional objects.

9. Method according to claim 8, **characterized in that** said virtual selection object (2) is modelled as a sphere and said virtual landscape (1, 3) is at least partly modelled as a system of pipes.

10. Method according to any one of the preceding claims, **characterized in that** said virtual landscape (10) is modelled as a three dimensional object.

11. Method according to any one of the preceding claims, **characterized by** conveying additionally to the haptic information also visual or aural information.

## Patentansprüche

1. Verfahren zum Steuern einer Einrichtung mittels eines haptischen Systems mit einer haptischen Ein-/Ausgabeeinrichtung, mit den Schritten:
- virtuelles Generieren mindestens einer dreidimensionalen virtuellen Landschaft,
- Assoziieren eines dreidimensionalen virtuellen Auswahlobjekts mittels der haptischen Ein-/Ausgabeeinrichtung, wobei das virtuelle Auswahlobjekt ein virtuelles Objekt ist, welches innerhalb der virtuellen Landschaft mittels der haptischen Ein-/Ausgabeeinrichtung umher bewegt werden kann,
- Zuordnen eines Kommandos (A, B, C) zu einem Ort (4; 10a - 10c; 10d - 101) auf der virtuellen Landschaft (1, 3; 10),
wobei das virtuelle Auswahlobjekt (2), welches mit der haptischen Ein-/Ausgabeeinrichtung assoziiert ist, auf der virtuellen Landschaft (1, 3) zu einer Ruhestelle (4; 10a - 10c; 10d - 101) hin bewegbar ist, und zwar korrespondierend mit dem Kommando (A, B, C), um das Kommando (A, B, C) zu erzeugen,
- automatisches Abgeben des Kommandos (A, B, C) an die Einrichtung, welche zu steuern ist, und zwar nachdem das virtuelle Auswahlobjekt (2) mittels der haptischen Ein-/Ausgabeeinrichtung zur Ruhestelle (10a - 10c; 10d - 101) hin bewegt wurde und dort für eine vorbestimmte Zeitspanne an der Ruhestelle (4) ruht, **dadurch gekennzeichnet**
**dass** das Bewegen geführt wird zwischen den mindestens zwei Ruhestellen (4), und zwar mittels einer Kraftausgabe an den Benutzer durch Ausüben einer Kraft auf die haptische Ein-/Ausgabeeinrichtung,
wobei jede Ruhestelle (4) ausgebildet ist, das virtuelle Auswahlobjekt (2) innerhalb eines bestimmten Bereiches anzuziehen.

2. Verfahren nach Anspruch 1, **gekennzeichnet durch** Zuordnen eines Kommandos oder einer Untermenge aller möglichen Kommandos zu einer Ruhestelle (4) innerhalb der virtuellen Landschaft (1, 3), zu welcher ein korrespondierendes virtuelles Auswahlobjekt (2), welches mit der haptischen Ein-/Ausgabeeinrichtung assoziiert ist, angepasst werden kann.

3. Verfahren nach Anspruch 2, **gekennzeichnet durch** Assoziieren eines von verschiedenen virtuellen Auswahlobjekten zur haptischen Ein-/Ausgabeeinrichtung.

4. Verfahren nach Anspruch 3, **dadurch gekennzeichnet, dass** mindestens eine korrespondierende Ruhestelle für jedes verschiedene virtuelle Auswahlobjekt vorliegt.

5. Verfahren nach einem der vorangehenden Ansprüche 2 bis 4, **gekennzeichnet durch** Aufprägen einer simulierten anziehenden Kraft, die vergleichbar ist mit einer realen magnetischen Kraft, auf das virtuelle Auswahlobjekt (2), wann immer dieses innerhalb eines Bereiches der korrespondierenden Ruhestelle (4) kommt.

6. Verfahren nach einem der vorangehenden Ansprüche 2 bis 5, **gekennzeichnet durch** Aufprägen einer simulierten Gravitationskraft, die gemäß der Gravitation modelliert ist, auf das virtuelle Auswahlobjekt (2), und zwar über die Landschaft (1, 3) hinweg.

7. Verfahren nach einem der vorangehenden Ansprüche 2 bis 6, **gekennzeichnet durch** Anordnen unterschiedlicher simulierter Reibungsbereiche (5a, 5b) entlang eines Pfades des virtuellen Auswahlobjekts (2) zur korrespondierenden Ruhestelle (4).

8. Verfahren nach einem der vorangehenden Ansprüche 2 bis 7, **dadurch gekennzeichnet, dass** das virtuelle Auswahlobjekt (2) und die virtuelle Landschaft (1, 3) als dreidimensionale Objekte modelliert sind.

9. Verfahren nach Anspruch 8, **dadurch gekennzeichnet, dass** das virtuelle Auswahlobjekt (2) als Sphäre modelliert ist und dass die virtuelle Landschaft (1, 3) zumindest teilweise als System von Röhren modelliert ist.

10. Verfahren nach einem der vorangehenden Ansprüche, **dadurch gekennzeichnet, dass** die virtuelle Landschaft (10) als dreidimensionales Objekt modelliert ist.

11. Verfahren nach einem der vorangehenden Ansprüche, **gekennzeichnet durch** Übertragen - neben der haptischen Information - von visueller oder hörbarer Information.

## Revendications

1. Procédé de contrôle d'un dispositif par l'intermédiaire d'un système haptique comportant un dispositif d'entrée/sortie haptique, comportant les étapes consistant à :
- générer virtuellement au moins un paysage virtuel tridimensionnel ;
- associer un objet de sélection virtuel tridimensionnel audit dispositif d'entrée/sortie haptique, lequel objet de sélection virtuel est un objet virtuel qui peut être déplacé à l'intérieur dudit paysage virtuel par ledit dispositif d'entrée/sortie haptique ;
- assigner une commande (A, B, C) à un emplacement (4 ; 10a-10c ; 10d-101) sur ledit paysage virtuel (1, 3 ; 10),
dans lequel ledit objet de sélection virtuel (2) associé au dispositif d'entrée/sortie haptique peut être déplacé vers un point d'arrêt (4 ; 10a-10c ; 10d-101) sur ledit paysage virtuel (1, 3) correspondant à ladite commande (A, B, C) pour générer ladite commande (A, B, C) ;
- émettre automatiquement ladite commande (A, B, C) audit dispositif, qui doit être contrôlé, après que ledit objet de sélection virtuel (2) a été déplacé vers l'point d'arrêt (10a-10c ; 10d-101) par l'intermédiaire dudit dispositif d'entrée/sortie haptique et reste pendant un temps prédéterminé à l'point d'arrêt (4), **caractérisé en ce que** :
ledit déplacement est guidé entre au moins deux points d'arrêt (4) par une force délivrée à l'utilisateur en imposant la force audit dispositif d'entrée/sortie haptique,
dans lequel chaque point d'arrêt (4) est configuré de manière à attirer l'objet de sélection virtuel (2) à l'intérieur d'une certaine plage.

2. Procédé selon la revendication 1, **caractérisé par** l'assignation d'une commande ou d'un sous-ensemble de toutes les commandes possibles à un point d'arrêt (4) à l'intérieur dudit paysage virtuel (1, 3) auquel un objet de sélection virtuel correspondant (2) associé au dispositif d'entrée/sortie haptique peut être fixé.

3. Procédé selon la revendication 2, **caractérisé par** l'association d'un des différents objets de sélection virtuel audit dispositif d'entrée/sortie haptique.

4. Procédé selon la revendication 3, **caractérisé en ce que** au moins un point d'arrêt correspondant existe pour chaque objet de sélection virtuel différent.

5. Procédé selon l'une quelconque des revendications précédentes 2 à 4, **caractérisé par** l'application d'une force d'attraction simulée comparable à une force magnétique réelle à l'objet de sélection virtuel (2) à chaque fois qu'il se déplace dans une certaine plage de l'point d'arrêt correspondant (4).

6. Procédé selon l'une quelconque des revendications précédentes 2 à 5, **caractérisé par** l'application d'une force gravitationnelle simulée modelée d'après la gravitation appliquée à l'objet de sélection virtuel (2) à travers le paysage (1, 3).

7. Procédé selon l'une quelconque des revendications précédentes 2 à 6, **caractérisé par** la disposition de différentes zones de friction simulée (5a, 5b) le long d'un trajet de l'objet de sélection virtuel (2) à l'point d'arrêt correspondant (4).

8. Procédé selon l'une quelconque des revendications précédentes 2 à 7, **caractérisé en ce que** ledit objet de sélection virtuel (2) et ledit paysage virtuel (1, 3) sont modelés en tant qu'objets tridimensionnels.

9. Procédé selon la revendication 8, **caractérisé en ce que** ledit objet de sélection virtuel (2) est modelé sous forme de sphère et ledit paysage virtuel (1, 3) est au moins partiellement modelé sous la forme d'un système de tuyaux.

10. Procédé selon l'une quelconque des revendications précédentes, **caractérisé en ce que** ledit paysage virtuel (10) est modelé en tant qu'objet tridimensionnel.

11. Procédé selon l'une quelconque des revendications précédentes, **caractérisé par** le transport, en plus de l'information haptique, d'une information visuelle ou auditive.
